# EUROPEAN PATENT APPLICATION

(11) **EP 1 848 164 A1**
(43) Date of publication of application: **24.10.2007**
(21) Application number: 06761619.3
(22) Date of filing: 02.08.2006
(51) Int. Cl.: H04L 12/56

(54) **A METHOD FOR FAULT DETECT , REPORT AND MAINTENANCE NEGOTIATION CONTROL OF MULTI-SEGMENT PSEUDO WIRE**

(30) Priority: 30.09.2005 CN 200510107403
(71) Applicant: Huawei Technologies Co., Ltd., Longgang District Shenzhen Guangdong 518129 (CN)
(72) Inventor: DONG, Jixiong, Guangdong 518129 (CN)
(74) Representative: Pfenning, Meinig & Partner GbR
(86) International application number: PCT/CN2006/001945
(87) International publication number: WO 2007/036120

(57) **Abstract**

A method for fault detect, report and maintenance negotiation control of the multi-segment pseudo wire solves the problems in the prior art that the fault report of multi-segment pseudo wire and the end-to-end maintenance can not be performed and flexibly selecting a corresponding maintenance policy according the capability of devices can not be provided. The method of detect is that an end-to-end detection message which is transmitted by a source node is transparently transmitted by a switching node to an ultimate node, thereby realizing the end-to-end detection. The method for reporting the fault is that the switching node transmits a fault notification message transparently transmitted and carrying the fault information to a downstream ultimate node when detecting the fault. The method of maintenance negotiation control is that the fault detection information and the fault reporting capability information are carried in the established message during establishing the multi-segment pseudo wire and enables the terminal to flexibly select the maintenance method which accords with the predetermined policy according to the finally supported capability.

## Description

### Field of the Invention

The present invention relates to packet switch network, and particularly to a method of fault detection, report, and maintenance negotiation control for a multi-segment pseudo wire.

### Background of the Invention

PSN (Packet Switch Network) is a developing trend in the combination of transport networks today, i.e., traditional services are migrated to the combined network, and the combined network shall meet the demand for development of new services. Due to the high bandwidth utilization (can be statistically multiplexed) and increasingly improved QoS (Quality of Service) assurance capability, great attention has been paid to PSN. Many operators have migrated services from FR (Frame Relay) private lines, Ethernet private lines, and ATM (Asynchronous Transfer Mode) private lines to PSN, in order to reduce the operating costs and improve service deployment capability. PSNs mainly include MPLS (Multiple Protocol Label Switching) networks, L2TP (Layer 2 Tunneling Protocol) networks, and IP (Internet Protocol) networks; wherein, MPLS has a trend to develop into a separate transport layer.

A PW (Pseudo Wire) refers to an emulated service borne on PSN. The method of emulating ATM, FR, and Ethernet services over NTLS/IP network is defined in IETF PWE3. In standardization, IETF (Internet Engineering Task Force) has worked out drafts related to PWE3 (Pseudo Wire Emulation Edge-to-Edge), to implement transportation of ATM/FR/Ethernet/N*64K services over PSN.

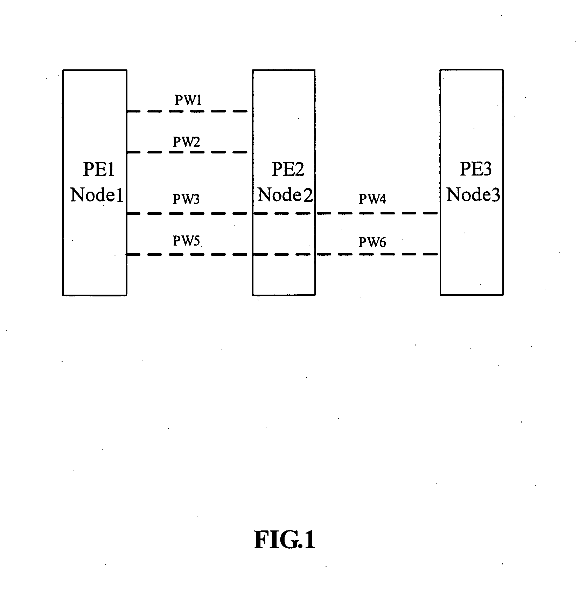

The model of PW is shown in figure 1. PWs are classified into Single-Segment PWs and Multi-Segment PWs. A Single-Segment PW (abbreviated as SS-PW, also referred to as SH-PW (Single-Hop PW)) refers to a PW established directly between two PEs (Provider Equipments), without passing through any other PE (i.e., there is no PW switching point between the two PEs). As shown in figure 1, two PWs (i.e., PW1 and PW2) established directly between PE1 and PE2 are SS-PWs. A Multi-Segment PW (abbreviated as MS-PW, also referred to as MH-PW (Multi-Hop PW)) refers to a PW established between two PEs via one or more PEs (intermediate PEs are referred to as Switching-PEs). As shown in figure 1, PW3 and PW4 established between PE1 and PE3 constitute an MS-PW, and PW5 and PW6 constitute another MS-PW. An MS-PW requires switching between at least two SS-PWs; for example, for PW3 and PW4 connected by PE2, each of the SS-SWs (i.e., PW3 and PW4) can be regarded as a Segmented PW. Traffics are forwarded via intermediate PE2, which is referred to as an S-PE (Switching-PE). The PEs at the two ends are referred to as a U-PE (Ultimate PE) or T-PE (Terminate PE) respectively.

At present, in PWE3 drafts, an OAM (Operation And Maintenance) solution for SS-PWs is defined, including Pseudo Wire (PW) OAM Message Mapping (OAM MAP) method and Virtual Circuit Connectivity Verification (VCCV). Wherein, OAM MAP describes a method of exchanging fault messages between an L2 access network and the PW, while VCCV describes a method of fault detection and diagnostics for the PW between two PEs. As shown in figure 1, the SS-PW OAM solution defines three VCCV messages for fault detection and diagnostics for PW: ICMP (Internet Control Message Protocol) PING message, BFD (Bidirectional Forwarding Detection) message, and LSP (Label Switch Path) PING message.

In accordance with the BFD-based detection method, a PE (e.g., PE1) sends a BFD control message in a negotiated sending cycle to another PE (e.g., PE2); if PE2 does not receive the BFD control message within a certain time, it indicates there are faults in the circuit from PE1 to PE2; otherwise it indicates the circuit from PE1 to PE2 operates normally. In accordance with the PING-based detection method, a PE (e.g., PE1) sends a PING message to another PE (e.g., PE2); upon receiving the PING message, PE2 returns the PING message as a response message; if PE1 receives the returned response message within a given time; it indicates the bidirectional circuit between PE1 and PE2 operates normally; otherwise it indicates there are faults in the circuit.

If PW1 is detected as failed through exchanging a VCCV message between PE1 and PE2, an alarm can be reported, or protective switching can be performed.

If a segmented PW in an MS-PW fails, either of the following two protective switching policies can be used: one policy is SS-PW based protection, i.e., PW2 is switched to PW1 from PE1 and PE2; the other policy is End-to-End (E2E) based OAM, i.e., a protective MS-PW is reestablished between two U-PEs for switching. Fault information is usually collected at the PE where the connection fails, but SS-PW OAM can not distinguish SS-PW faults from end-to-end MS-PW faults. Furthermore, due to the fact that the three SS-PW OAM messages can only be transmitted between two adjacent PEs, fault information of each segmented PW in an MS-PW can not be fed back to the U-PEs of MS-PW. As a result, the second protective switching policy is inapplicable, and thereby a protective policy can not be chosen flexibly in accordance with specific equipment capability.

### Summary of the Invention

An aspect of the present invention provides a method of fault detection for an MS-PW. Another aspect of the present invention provides a method of fault report for an MS-PW. A further aspect of the present invention provides a method of maintenance negotiation control for an MS-PW.

A method of end-to-end fault detection for a multi-segment pseudo wire, including the following steps:

sending an end-to-end Multi-Segment Pseudo Wire (MS-PW) fault detection message by a first Ultimate Provider Equipment (U-PE1) of an MS-PW in accordance with a predetermined triggering condition or by a predetermined time; receiving and transparently transmitting the end-to-end fault detection message hop by hop downstream by Switching PEs (S-PEs);

determining, by a second Ultimate Provider Equipment (U-PE2), whether the end-to-end fault detection message in accordance with the predetermined triggering condition or by the predetermined time is received; and if the end-to-end fault detection message is received accordingly, determining the MS-PW operates normally; otherwise determining the MS-PW as failed.

A method of end-to-end fault detection for a multi-segment pseudo wire, including the following steps:

sending an end-to-end Multi-Segment Pseudo Wire (MS-PW) fault detection message by U-PE1 of an MS-PW; receiving and transparently transmitting, by S-PE, the end-to-end fault detection message hop by hop to a second Ultimate Provider Equipment (U-PE2) downstream; upon receiving the end-to-end fault detection message, returning a response message to U-PE1 by U-PE2; and

monitoring a response time of the end-to-end fault detection message by U-PE1; and if the response message is received before the response time expires, determining the MS-PW operates normally; otherwise determining the MS-PW as failed.

In either of the above two methods, the end-to-end fault detection message contains a first identification information, which is used by the S-PEs or U-PE2 to identify whether a received message is an end-to-end fault detection message.

A method of fault detection and report for a multi-segment pseudo wire, including the following steps:

if an SS-PW of a Multi-Segment Pseudo Wire (MS-PW) fails, creating and sending a fault notification message carrying fault information downstream by the S-PE;

forwarding, by downstream S-PEs, the fault notification message to U-PE hop by hop transparently, or receiving the fault notification message by a U-PE at downstream;

obtaining the fault information from the fault notification message by the U-PE.

An SS-PW is determined by the S-PE as failed in the following way:

sending, by a PE connected to one end of the SS-PW, a single-segment fault detection message to an opposite end for detection in accordance with a predetermined triggering condition or by a predetermined time; determining by the opposite end whether the single-segment fault detection message is received in accordance with the predetermined triggering condition or by the predetermined time; if the single-segment fault detection message is received accordingly, determining the SS-PW operates normally; otherwise determining the SS-PW as failed; or

sending, by a PE connected to one end of the SS-PW, a single-segment fault detection message to an opposite end, determining whether a response message to the single-segment fault detection message from the opposite end is received within a preset time; if the response message is received within the preset time, determining the SS-PW operates normally; otherwise determining the SS-PW as failed.

The method further includes: upon detecting a Tunnel fault, or a PW state notification fault, or a local PE fault, creating a fault notification message carrying fault information and sending the fault notification message downstream by the S-PE.

The fault notification message contains a second identification information, which is used by the S-PEs or U-PE2 to identify whether a received message is a fault notification message; and/or

the single-segment fault detection message contains a third identification information, which is used by the S-PEs or U-PE2 to identify whether a received message is a single-segment fault detection message.

The fault information comprises fault type information and fault location information.

A method of maintenance negotiation control for multi-segment pseudo wire, including the following steps:

B1: Creating a positive setup message for an MS-PW by a source U-PE; the positive setup message containing information on fault information report capability and fault detection capability supported by the source U-PE;

B2: Receiving, by Switching Provider Equipments (S-PEs), the positive setup message hop by hop, and determining whether the information on the fault information report capability is supported locally and whether the information on the fault detection capabilities are partially supported locally; if all or part of the fault information report capability and the fault detection capabilities is supported, keeping only information on the locally supported capabilities in the positive setup message, forwarding the positive setup message, and going to step B3; if none of the fault information report capability and the fault detection capabilities is supported, going to step B4;

B3: Upon receiving the positive setup message forwarded by S-PEs hop by hop, determining by the terminal U-PE whether information on the kept capabilities is supported locally; if all or part of the kept capabilities is supported, determining to perform an MS-PW maintenance operation in a supported capability information set in accordance with a local policy; if none of the kept capabilities is supported, otherwise going to step B4;

B4: Disconnecting an established PW segment.

The method further includes the following steps between the steps B3 and B4:

B31: Sending a reverse setup message for the MS-PW to the source U-PE by the terminal U-PE; the reverse setup message carrying information on fault information report capability and fault detection capability supported by the terminal U-PE or carrying the supported capability information set determined during the positive setup process of the MS-PW;

B32: Receiving by the S-PEs the reverse setup message hop by hop, and determining whether the information on the fault information report capability is supported locally and whether the information on the fault detection capabilities is partially supported locally; if all or part of the fault information report capability and the fault detection capabilities is supported, keeping only information on the locally supported capabilities in the reverse setup message, forwarding the reverse setup message, and going to step B33; if none of the fault information report capability and the fault detection capabilities is supported, going to step B4;

B33: Upon receiving the reverse setup message forwarded by S-PEs hop by hop, determining by the terminal U-PE whether information on the kept capabilities is supported locally; if all or part of the kept capabilities is supported, determining to perform an MS-PW maintenance operation in the supported capability information set in accordance with a local policy; if none of the kept capabilities is supported, otherwise going to step B4.

The information on fault information report capability refers to: if an SS-PW connected to the U-PE or S-PE fails, a U-PE or S-PE connected with the SS-PW can create and send a fault notification message carrying fault information to a downstream S-PE or U-PE, and can identify and process the fault notification message;

the information on fault detection capability refers to: the U-PEs or S-PEs can identify and process end-to-end fault detection messages for the MS-PW sent by U-PE and/or single-segment fault detection messages sent between PEs.

If all U-PEs and S-PEs support the fault information report capability and can identify and process the end-to-end fault detection messages, the MS-PW is maintained as follows:

if an SS-PW of the MS-PW fails, creating and sending a fault notification message carrying fault information downstream by the S-PE;

forwarding, by downstream S-PEs, the fault notification message to a U-PE hop by hop transparently, or receiving the fault notification message by a U-PE at downstream;

obtaining the fault information from the received fault notification message and performing maintenance on the MS-PW in accordance with the fault information by the U-PE.

An SS-PW is determined by the S-PE involved in the SS-PW as failed in the following way:

sending, by a PE connected to one end of the SS-PW, a single-segment fault detection message to an opposite end for detection in accordance with a predetermined triggering condition or by a predetermined time; determining by the opposite end whether the single-segment fault detection message is received in accordance with the predetermined triggering condition or by the predetermined time; if the single-segment fault detection message is received accordingly, determining the SS-PW operates normally; otherwise determining the SS-PW as failed; or

sending, by a PE connected to one end of the SS-PW, a single-segment fault detection message to an opposite end, determining whether a response message to the single-segment fault detection message from the opposite end is received within a preset time; if the response message is received within the preset time, determining the SS-PW operates normally; otherwise determining the SS-PW as failed.

The method further includes: upon detecting a Tunnel fault, or a PW state notification fault, or a local PE fault, creating a fault notification message carrying fault information and sending the fault notification message downstream by the S-PE.

If all U-PEs and S-PEs support only end-to-end fault detection messages, the MS-PW is maintained as follows:

sending, by U-PE1 of the MS-PW, an end-to-end MS-PW fault detection message in accordance with a predetermined triggering condition or by a predetermined time; receiving and transparently transmitting the end-to-end fault detection message hop by hop downstream by the S-PEs;

determining, by U-PE2, whether the end-to-end fault detection message is received in accordance with the predetermined triggering condition or by the predetermined time; and if the end-to-end fault detection message is received accordingly, determining the MS-PW operates normally; otherwise determining the MS-PW as failed and performing maintenance.

If all U-PEs and S-PEs support only end-to-end fault detection messages, the MS-PW is maintained as follows:

sending an end-to-end MS-PW fault detection message by U-PE1 of the MS-PW; receiving and transparently transmitting, by S-PEs, the end-to-end fault detection message hop by hop to a second Ultimate Provider Equipment (U-PE2) downstream; upon receiving the end-to-end fault detection message, returning a response message to U-PE1 by U-PE2; and

monitoring a response time of the end-to-end fault detection message by U-PE1; and if the response message is received before the response time expires, determining the MS-PW operates normally; otherwise determining the MS-PW as failed.

The positive setup message and/or the reverse setup message further contains information on supported fault detection message type capability, and the U-PEs or S-PEs choose supported fault detection messages for detection in accordance with an ultimate intersection of capability information.

The end-to-end fault detection message contains a first identification information, which is used by the S-PEs or U-PEs to identify whether a received message is an end-to-end fault detection message; and/or

The fault notification message contains a second identification information, which is used by the S-PEs or U-PEs to identify whether a received message is a fault notification message; and/or

The single-segment fault detection message contains a third identification information, which is used by the S-PEs or U-PEs to identify whether a received message is a single-segment fault detection message.

The fault information comprises fault type information and fault location information.

With the method of fault detection, fault report, and maintenance negotiation control for MS-PW according to the present invention, if any SS-PW fails in an MS-PW, the S-PE connected to the SS-PW can report fault information to the terminal U-PE in time, so as to implement an end-to-end maintenance. In addition, based on the maintenance method, the method of maintenance negotiation control for MS-PW put forward in the present invention supports choosing an appropriate maintenance policy flexibly in accordance with equipment capability. Furthermore, the present invention is highly compatible with the existing SS-PW OAM method, and is easy to implement.

### Brief Description of the Drawings

Figure 1 is a schematic diagram of PW model, which covers SS-PW and MS-PW;

Figure 2 shows a control word structure of a traditional in-band OAM message;

Figure 3 is a schematic diagram of control word structure of in-band OAM message, which is extended in an embodiment of the present invention to include an F/T ID;

Figure 4 is a schematic diagram of a FIN message format used in an embodiment of the present invention;

Figure 5 is a schematic diagram of end-to-end MS-PW OAM used in an embodiment of the present invention;

Figure 6 is a schematic diagram of format of VCCV control message used for OAM capability negotiation in an embodiment of the present invention.

### Detailed Description of the Invention

The technical concept of the present invention is:

1. If PEs support segmented OAM, in order to implement transparent transmission of fault information of a segment to U-PEs in a way similar to end-to-end OAM, an embodiment of the present invention first provides a new type of message: FIN (Fault Information Notification) message, which is used to implement transmission of fault information of segmented PWs to U-PEs of an MS-PW.

2. Based on the FIN message provided in the present invention, the present invention provides an E2E (end-to-end) OAM-based detection and report method, i.e., if an SS-PW fails, a downstream PE (i.e., S-PE) can notify fault information of the SS-PW to a U-PE with the FIN message, thereby triggering quick switching of U-PE, alarm suppression, and alarm report, etc.

3. Based on the E2E OAM mode described in the embodiment, an embodiment of the present invention also provides a method for operation and maintenance negotiating, i.e., during the process of the PEs establishing an MS-PW, the PEs can choose SS-PW-based protection and/or E2E-based MS-PW protection in accordance with their own capabilities, respectively. The SS-PW-based protection requires SEGMENT OAM capability, while the E2E-based MS-PW protection requires E2E OAM capability.

Hereinafter embodiments of the present invention are described.

I. FIN message

1. Information to be carried in payload of FIN message

FIN message type indication, which is designed to identify that the message is used for fault information report, and is usually implemented by setting an agreed "1" or "0" in a specific bit.

Fault location information, which is designed to identify fault location, and can be denoted as IP of the S-PE which creates the FIN message; the fault location information is used for fault locating and is usually reported to a network administrator, so that an operation and maintenance personnel can determine approximate location of the fault and perform maintenance accordingly.

Fault type information: which is designed to identify fault type; it can be PW state information (e.g., "Pseudo Wire Not Forwarding") or fault diagnostic information created during BFD detection (e.g., "Control Detection Time Expired" indicated in VCCV), and is usually denoted as a corresponding fault code.

The network administrator can determine whether there is any trouble in a data plane or a control plane, or a fault severity, and set down an appropriate switching policy by fault type.

There is a FIN message header before the payload of FIN message; format of the message header depends on PSN. For example, if the PSN is an MPLS network, the FIN message header maybe further contains the following information: Transport tunnel label and PW label, etc.

2. Triggering conditions for the FIN message include:

Faults detected in local OAM mechanism (e.g., BFD);

Tunnel faults;

PW state notification faults;

Local PE faults, e.g., software/hardware invalidation, etc.

Wherein, faults detected in local OAM mechanism (e.g., BFD) are major triggering conditions.

3. Structure of FIN message

The FIN messages can be transmitted through traditional VCCV control channels, which are classified into three types: one is in-band OAM message channel (in which the OAM messages are identified by control word); another is out-of-band OAM message channel (in which the OAM messages are identified by special label); another is TTL expire OAM message channel. Wherein, the latter two channels are similar in process of OAM payload. FIN messages can be extended with any of the above three control channels. Hereinafter an embodiment of the present invention is described with in-band OAM message as an example.

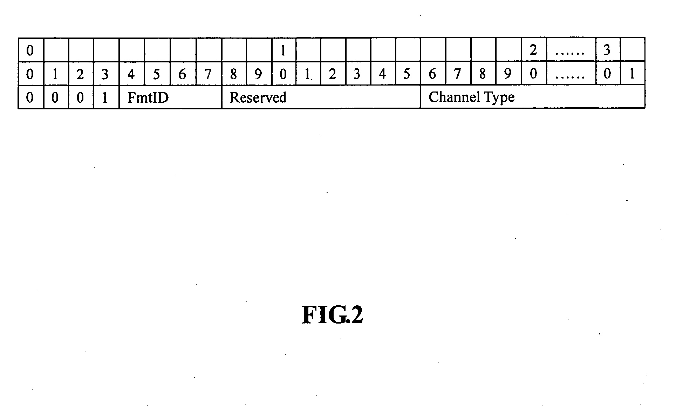

As shown in figure 2, a control word of the in-band OAM message includes 32 bits; wherein, the first 4 bits are used to identify message type ("0000" represents data message, "0001" represents in-band OAM message); the next 4 bits are used to set FmtID (Format Identifier); the next 16 bits are used to set Channel Type, with 8 bits between "FmtID" and "Channel Type" as Reserved bits, in which any bit can be chosen to set FIN message type indication.

For the implementation of SEGMENT OAM or E2E OAM fault detection mechanism respectively, the VCCV fault detection message has to be extended as follows to distinguish the two fault detection modes: the Reserved bits in the control word are used to identify whether the message is a SEGMENT OAM message or E2E OAM message; wherein, the SEGMENT OAM message is used for fault detection, diagnostics, and notification on an SS-PW, while the E2E OAM message is used for fault detection, diagnostics, and notification for end-to-end MS-PW.

No matter whether SEGMENT OAM or E2E OAM fault detection mechanism is used, the S-PE can collect fault information, create a FIN message, send the FIN message to the U-PE and thereby implement end-to-end operation and maintenance if a previous SS-PW fails, as long as the S-PE supports message report capability.

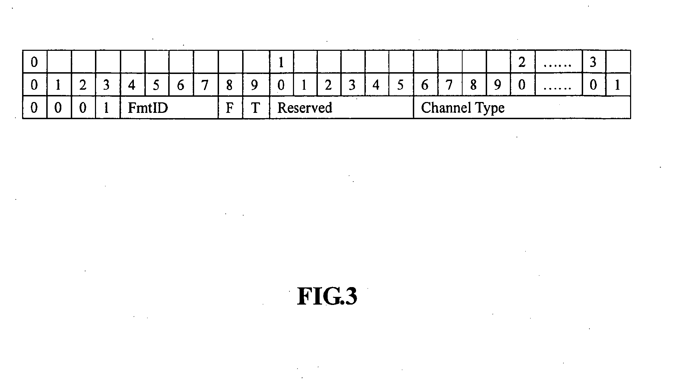

In conclusion, the format of extended control word is shown in figure 3. F is set ("1" or "0", as required) at the eighth Bit in a Bitmask manner to indicate that the message is a FIN message; T is set ("1" or "0", as required) at the ninth Bit to indicate whether the message is a SEGMENT OAM message or E2E OAM message. The identification mode shown in figure 3 is only an applicable one. A specific identification position can be at any Reserved bit. Therefore, the identification modes shall not be deemed as constituting any limitation to the implementation of embodiments of the present invention.

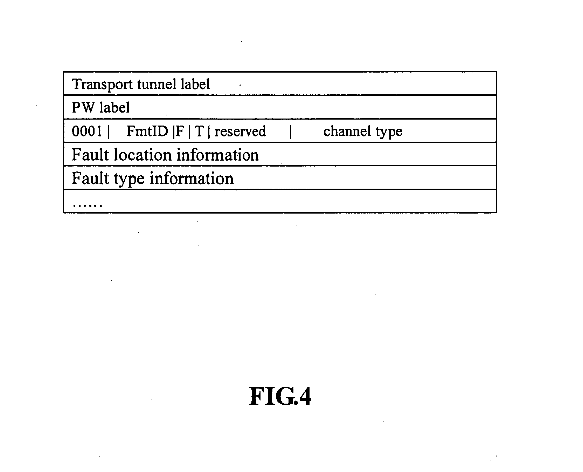

If the PSN is an MPLS network, the FIN message format through the above extension is shown in figure 4. Wherein, the message header includes: Transport tunnel label, PW label, and control word. The control word in the extended VCCV message includes identifier F indicating whether the message is a FIN message and identifier T indicating whether the message is a SEGMENT OAM message or an E2E OAM message. The payload field of FIN message carries fault location information, fault type information, or some other information.

The out-of-band OAM channel can be identified and processed by setting an appropriate identifier F/T in payload of OAM message in a similar way, which is not described here further.

II. The processing of different OAM messages by PEs includes:

1. If F indicates that the OAM message is a fault information notification message, the OAM message will be transmitted directly through S-PEs in a transparent mode, till it reaches the U-PE.

2. If F indicates that the OAM message is not a fault information notification message, it indicates that the OAM message is a negotiated message created during PW setup, and the OAM message will be processed as an ordinary VCCV message.

3. If T indicates that the message is a SEGMENT OAM message, the S-PE will not forward the SEGMENT OAM message upon receiving and processing the SEGMENT OAM message. Because it is a SEGMENT OAM message (i.e., SS-PW-based message), only the SS-PW is to be detected and the SEGMENT OAM message need not to be transmitted to U-PE. Of course, if the SS-PW is between the S-PE and the U-PE, the SEGMENT OAM message will be transmitted to the U-PE. In fact, it is only required that the SEGMENT OAM message be transmitted to the terminal PE of the SS-PW instead of the U-PE of the MS-PW.

4. If T indicates that the message is an E2E OAM message, the S-PE will transmit the E2E OAM message directly to the next SS-PW of the MS-PW transparently, till the E2E OAM message reaches the U-PE.

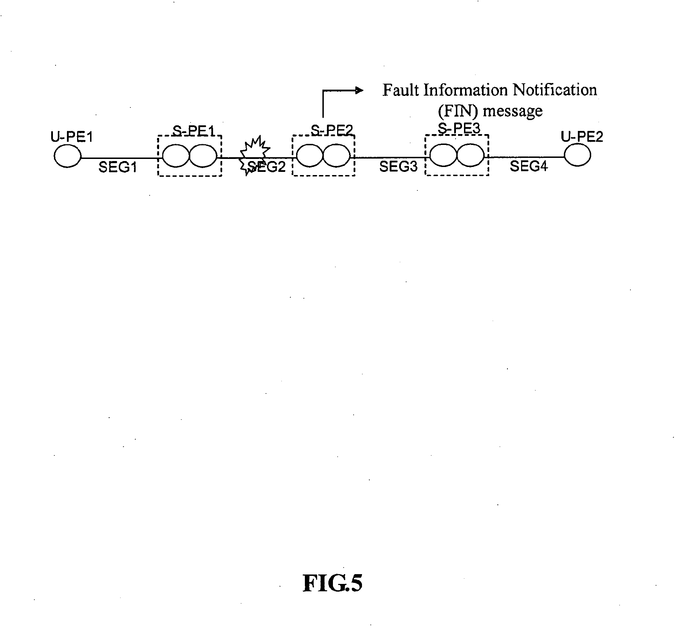

As shown in figure 5, if SEGMENT 2 fails, a downstream S-PE will receive fault information and thereby sends a fault information notification message to a remote PE (i.e., U-PE2), to notify U-PE2 of fault location and fault type information, in particular, if S-PE1→S-PE2 fails, S-PE1 will send a fault information notification message to U-PE2. If S-PE2→S-PE1 fails, S-PE2 will notify U-PE1 of the fault. Upon receiving the FIN message, a U-PE sends a PW state notification message to an opposite U-PE to notify of current state of the PW.

III. OAM capability negotiation method

Since PEs may not support the above new OAM capability, the above OAM capability has to be negotiated between U-PE and S-PE, between S-PEs, and between U-PEs during the MS-PW setup process. For the purpose of supporting the negotiation function (i.e., two capabilities: one is whether processing of fault information notification OAM message is supported; the other is whether E2E OAM or SEGMENT OAM is supported, or both E2E OAM and SEGMENT OAM are supported), VCCV control message format defined in PWE3 has to be extended to include identifier information related to OAM capability. Usually the extension is also in a Bitmask manner, i.e., a bit is used to indicate whether a specific capability is supported; for example, bit0 indicates whether ICMP PING is supported (bit0=0 indicates not support; bit0=1 indicates support). Bit1 indicates whether LSP PING is supported (bit1=0 indicates not support; bit1=1 indicates support).

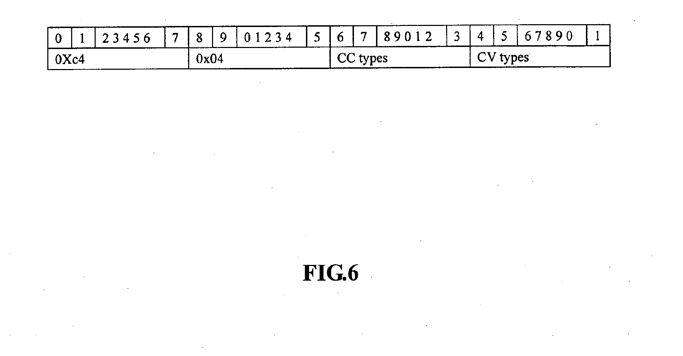

The interface parameter format shown in figure 6 is used during VCCV capability negotiation; wherein:

0Xc4: Field T is a type field, indicating that the type of TLV (Type-Length-Value) is a VCCV interface parameter;

0×04: Field L is a length field, indicating that the length of TLV, i.e., the length of the VCCV interface parameter is 4 bytes;

CC types indicate control channel types supported by a sending party; and

CV types indicate the OAM message types supported by a sending party. In a Bitmask manner, 0x01 is configured to indicate support for ICMP PING fault detection message, 0x02 is configured to indicate support for LSP PING fault detection message, and 0x04 is configured to indicate support for BFD fault detection message.

As a consideration, the fault information report capability and the detection capability may be negotiated at the same time in a Bitmask manner. For example, in CV types, 0x10 is configured to indicate whether FIN message is supported, 0x20 is configured to indicate whether SEGMENT OAM is supported, 0x40 is configured to indicate whether E2E OAM is supported. Through the above extension, a full compatibility with the existing SS-PW OAM method can be assured.

Corresponding to the MS-PW model shown in figure 5, network elements process the MS-PW OAM message as follows:

1. Processing by U-PE, including an OAM capability negotiation, creation of OAM messages, and receiving and sending of OAM messages.

When an MS-PW is set up, a source U-PE makes the fault information notification capability information, SEGMENT/E2E OAM capability information (wherein, SEGMENT/E2E OAM represents SEGMENT and/or E2E OAM, and the same below), and information on supported CC types and CV types included in a signaling message. Upon receiving the negotiation request, a remote U-PE determines whether the capabilities are supported in accordance with its own capability, and provides a response.

If the U-PE supports E2E OAM, it determines to send an end-to-end VCCV message in accordance with a negotiation result obtained when the signaling is created; if the U-PE supports SEGMENT OAM, it determines to send a single-segment VCCV message in accordance with a negotiation result.

Upon receiving an E2E OAM message, the U-PE will perform an MS-PW OAM processing (e.g., determine end-to-end PW state, etc.).

Upon receiving a SEGMENT OAM message, the U-PE will perform an SS-PW OAM processing, which is identical to the traditional SS-PW processing.

2. Processing by S-PE, including an OAM capability negotiation, and receiving and sending of OAM messages.

When an MS-PW is set up, an S-PE will receive fault information notification capability information, SEGMENT/E2E OAM capability information, and information on supported CC types and CV types in the signaling message, and determine whether one or more of the capabilities are supported in accordance with its own capability. If one or more of the capabilities are supported, the S-PE makes the indication for the supported capability (capabilities) included in the signaling message to be forwarded to the next S-PE; if none of the capabilities is supported, it is unable to establish the PW.

If the S-PE supports E2E OAM and receives an E2E OAM message, the S-PE will transmits the E2E OAM message transparently without any further processing. If the S-PE supports SEGMENT OAM, the S-PE is equivalent to U-PE of SS-PW in this case, and it will perform processing accordingly. If the S-PE does not support E2E OAM but receives an E2E OAM message, it will discard the E2E OAM message. If the S-PE does not support SEGMENT OAM but receives a SEGMENT OAM message, it will discard the SEGMENT OAM message.

If the S-PE learns that the SS-PW has failed by means of OAM diagnostics or PW state signaling, the S-PE will send a fault information notification message to a corresponding downstream or upstream S-PE in the MS-PW.

When the S-PE receives the fault information notification message, it will discard the FIN message if it does not support FIN message; or it will forward the FIN message if it supports FIN message.

In conclusion, For the implementation of the E2E OAM mechanism, S-PEs must support FIN capability. Hereinafter an embodiment of negotiation and maintenance process is described.

As shown in figure 5, the MS-PW includes four SS-PWs, two U-PEs, and three S-PEs, which is a common case. Suppose that all of the PEs support only BFD detection message, wherein, both the source U-PE and the terminate U-PE support FIN, SEGMENT OAM and E2E OAM capabilities, respectively; S-PE1, S-PE2, and S-PE3 support FIN and E2E OAM capabilities, respectively. When the MS-PW is set up, a negotiation process includes a negotiation in positive direction and a negotiation in reverse direction in the following steps. Wherein, the negotiation in positive direction includes steps S101~S104.

S101: The source U-PE creates a positive setup message for the MS-PW. The positive setup message contains information on the fault information report capability and information on the fault detection capabilities supported by the source U-PE.

S102: The S-PEs receive the positive setup message in sequence, and determine whether the information on the fault information report capability is supported locally and whether the information on the fault detection capabilities are partially supported locally. If all or part of the fault information report capability and the fault detection capabilities is supported, the S-PEs keep only information on the locally supported capabilities in the positive setup message, forward the positive setup message, and the procedure goes to step B3. If none of the fault information report capability and the fault detection capabilities is supported, the procedure goes to step S104.

S103: Upon receiving the positive setup message forwarded by S-PEs hop by hop, the terminate U-PE determines whether information on the kept capabilities is supported locally. If all or part of the kept capabilities is supported, the U-PE determines to perform a corresponding MS-PW maintenance operation in supported capability information set in accordance with a local policy. If none of the kept capabilities is supported, the procedure goes to step S104.

S104: An established PW segment is disconnected.

After the positive negotiation succeeds and the positive PW is established, there is a reverse negotiation procedure including the following steps between step S103 and S104.

S1031: The terminate U-PE sends a reverse setup message for the MS-PW to the source U-PE; the reverse setup message carries information on fault information report capability and information on fault detection capabilities supported by the terminate U-PE, or carries the supported capability information set determined during the positive setup process.

S1032: The S-PEs receive the reverse setup message hop by hop, and determine whether the information on the fault information report capability and the information on part of the fault detection capabilities are supported locally, or whether the supported capability information set determined during the positive setup process is supported locally. If all or part of the fault information report capability and the fault detection capabilities is supported, the S-PEs keep only information on the locally supported capabilities in the reverse setup message and then forward the reverse setup message, and the procedure goes to step S1033. If none of the capabilities is supported, the procedure goes to step S104.

S1033: Upon receiving the reverse setup message forwarded by S-PEs hop by hop, the source U-PE determines whether the information on the kept capabilities is supported locally. If all or part of the kept capabilities is supported, the U-PE determines to perform a corresponding MS-PW maintenance operation in the supported capability information set in accordance with a local policy. If none of the kept capabilities is supported, the procedure goes to step S104.

The positive setup message and/or the reverse setup message further contains information on supported fault detection message type capability. U-PE or S-PEs choose a supported fault detection message for detection in accordance with an ultimate intersection of capability information. For example, as shown in figure 1, if PE1 supports BFD and LSP PING, PE2 supports BFD, and PE3 supports BFD and LSP PING. When a positive PW from PE1 to PE3 is set up, a positive setup message sent from PE1 carries OAM capability indication, which indicates that PE1 supports two capabilities of BFD and LSP PING. Upon receiving the positive setup message, PE2 sends a positive setup message carrying only BFD capability of the OAM capability indication to PE3. When the positive setup message reaches PE3, PE3 will choose the BFD capability. When a reverse PW from PE3 to PE1 is set up, OAM capability indication carried in a reverse setup message sent from PE3 can be represented in either of the following two ways: one is to carry information on all OAM capabilities (i.e., BFD and LSP PING) supported by PE3; the other is to carry the information on OAM capability (i.e., BFD) chosen by PE3 during the positive PW setup process. Subsequent procedures are identical to those for OAM capability negotiation during the positive PW setup process.

The interface parameter negotiation process is performed by segment. It can be accomplished only if all PEs throughout an MS-PW support at least one and the same detection message and also support SEGMENT OAM or E2E OAM capability, and support FIN capability if the PEs support E2E OAM capability. Otherwise, a PE will cease sending an interface capability negotiation control message to upstream and disconnect the established PW segment(s) once it detects that the OAM capability identified in the interface capability negotiation control message can not be supported.

The PEs will keep the negotiation result and perform processing accordingly in the MS-PW service. With reference to figure 5, if the negotiation result is SEGMENT OAM, the following SEGMENT OAM process will be performed.

S201: SS-PW OAM is performed in SEG1, SEG2, SEG3, and SEG4 respectively by sending unidirectional or bidirectional SS-PW VCCV detection messages between PEs.

A control word of the SS-PW VCCV detection message is in a format as shown in figure 3, i.e., an identifier T is set in an existing detection message (e.g., T = 1 represents an SS-PW VCCV detection message).

If the MS-PW fails (as shown in figure 5, SEG2 fails), a downstream S-PE2 can not receive the SS-PW VCCV detection message sent periodically. Therefore, the downstream S-PE2 determines the MS-PW as failed and perform step S202.

S202: S-PE2 creates a FIN message and sends the FIN message to U-PE2.

The FIN message includes fault information and IP address of S-PE2, etc. A control word of the FIN message is also in a format as shown in figure 3, with an identifier F set in it.

S203: Upon receiving the FIN message, S-PE3 forwards the FIN message to U-PE2 without any processing.

S204: Upon receiving the FIN message, U-PE2 obtains the fault information, triggers a protective switching, and performs an alarm suppression and alarm report, etc.

With reference to figure 5, if the negotiation result is to perform E2E OAM, SS-PW OAM is performed in SEG1, SEG2, SEG3, and SEG4 respectively, and the U-PEs and S-PEs send SS-PW VCCV messages accordingly to perform the SS-PW OAM.

If the MS-PW works normally, the source U-PE sends an end-to-end VCCV detection message. A control word of the end-to-end VCCV detection message is also in a format as shown in figure 3, i.e., an identifier T is set in an existing detection message (e.g., T = 0 represents the end-to-end VCCV detection message). Upon receiving the detection message containing the identifier T (=0), S-PE1, S-PE2, and S-PE3 will forward the detection message without any processing, till the detection message reaches U-PE2.

Depending on the type of the supported detection message, if only BFD is supported or a BFD message is chosen in accordance with a local policy, the method of end-to-end fault detection for an MS-PW includes the following steps:

S301: U-PE1 of the MS-PW sends an end-to-end MS-PW fault detection message in accordance with a predetermined triggering condition or by a predetermined time. S-PEs receive and transparently transmit the end-to-end MS-PW fault detection message hop by hop to downstream.

S302: U-PE2 determines whether the end-to-end fault detection message is received in accordance with the predetermined triggering condition or by the predetermined time. If yes, the U-PE2 determines that the MS-PW operates normally; otherwise the U-PE2 determines the MS-PW as failed.

If a PING packet detection method is chosen, the method of end-to-end fault detection for an MS-PW includes the following steps:

S401: U-PE1 of the MS-PW sends an end-to-end MS-PW fault detection message. S-PEs receive and transparently transmit the end-to-end fault detection message hop by hop to downstream to U-PE2. Upon receiving the end-to-end fault detection message, U-PE2 returns a response message to U-PE1; and

S402: U-PE1 monitors a response time of the end-to-end fault detection message. If the response message is received before the response time expires, U-PE1 determines the MS-PW operates normally; otherwise U-PE1 determines the MS-PW as failed.

It is apparent that those skilled in the art can make variations and modifications to embodiments of the present invention without departing from the spirit and scope of the present invention. Such modifications and variations are intended to be encompassed in the present invention, provided they fall into the scope defined by the claims or equivalents thereof.

## Claims

1. A method of end-to-end fault detection for a multi-segment pseudo wire, comprising:
sending an end-to-end Multi-Segment Pseudo Wire (MS-PW) fault detection message by a first Ultimate Provider Equipment (U-PE1) of an MS-PW in accordance with a predetermined triggering condition or by a predetermined time;
receiving and transparently transmitting the end-to-end fault detection message hop by hop downstream by Switching PEs (S-PEs);
determining, by a second Ultimate Provider Equipment (U-PE2), whether the end-to-end fault detection message in accordance with the predetermined triggering condition or by the predetermined time is received; and if the end-to-end fault detection message is received accordingly, determining the MS-PW operates normally; otherwise determining the MS-PW as failed.

2. The method according to claim 1, wherein the end-to-end fault detection message contains a first identification information, which is used by the S-PEs or U-PE2 to identify whether a received message is an end-to-end fault detection message.

3. A method of end-to-end fault detection for a multi-segment pseudo wire, comprising:
sending an end-to-end Multi-Segment Pseudo Wire (MS-PW) fault detection message by U-PE1 of an MS-PW;
receiving and transparently transmitting, by S-PE, the end-to-end fault detection message hop by hop to a second Ultimate Provider Equipment (U-PE2) downstream;
upon receiving the end-to-end fault detection message, returning a response message to U-PE1 by U-PE2; and
monitoring a response time of the end-to-end fault detection message by U-PE1; and if the response message is received before the response time expires, determining the MS-PW operates normally; otherwise determining the MS-PW as failed.

4. The method according to claim 3, wherein the end-to-end fault detection message contains a first identification information, which is used by the S-PEs or U-PE2 to identify whether a received message is an end-to-end fault detection message.

5. A method of fault detection and report for a multi-segment pseudo wire, comprising:
A1. if an SS-PW of a Multi-Segment Pseudo Wire (MS-PW) fails, creating and sending a fault notification message carrying fault information downstream by the S-PE;
A2. forwarding, by downstream S-PEs, the fault notification message to U-PE hop by hop transparently, or receiving the fault notification message by a U-PE at downstream;
A3. obtaining the fault information from the fault notification message by the U-PE.

6. The method according to claim 5, wherein an SS-PW is determined by the S-PE as failed in the following way:
sending, by a PE connected to one end of the SS-PW, a single-segment fault detection message to an opposite end for detection in accordance with a predetermined triggering condition or by a predetermined time; determining by the opposite end whether the single-segment fault detection message is received in accordance with the predetermined triggering condition or by the predetermined time; if the single-segment fault detection message is received accordingly, determining the SS-PW operates normally; otherwise determining the SS-PW as failed; or
sending, by a PE connected to one end of the SS-PW, a single-segment fault detection message to an opposite end, determining whether a response message to the single-segment fault detection message from the opposite end is received within a preset time; if the response message is received within the preset time, determining the SS-PW operates normally; otherwise determining the SS-PW as failed.

7. The method according to claim 5, further comprising: upon detecting a Tunnel fault, or a PW state notification fault, or a local PE fault, creating a fault notification message carrying fault information and sending the fault notification message downstream by the S-PE.

8. The method according to claim 6 or 7, wherein the fault notification message contains a second identification information, which is used by the S-PEs or U-PE2 to identify whether a received message is a fault notification message; and/or
the single-segment fault detection message contains a third identification information, which is used by the S-PEs or U-PE2 to identify whether a received message is a single-segment fault detection message.

9. The method according to claim 8, wherein the fault information comprises fault type information and fault location information.

10. A method of maintenance negotiation control for multi-segment pseudo wire, comprising:
B1. creating a positive setup message for an MS-PW by a source U-PE; the positive setup message containing information on fault information report capability and fault detection capability supported by the source U-PE;
B2. receiving, by Switching Provider Equipments (S-PEs), the positive setup message hop by hop, and determining whether the information on the fault information report capability is supported locally and whether the information on the fault detection capabilities are partially supported locally; if all or part of the fault information report capability and the fault detection capabilities is supported, keeping only information on the locally supported capabilities in the positive setup message, forwarding the positive setup message, and going to step B3; if none of the fault information report capability and the fault detection capabilities is supported, going to step B4;
B3. upon receiving the positive setup message forwarded by S-PEs hop by hop, determining by the terminal U-PE whether information on the kept capabilities is supported locally; if all or part of the kept capabilities is supported, determining to perform an MS-PW maintenance operation in a supported capability information set in accordance with a local policy; if none of the kept capabilities is supported, otherwise going to step B4;
B4. disconnecting an established PW segment.

11. The method according to claim 10, between the steps B3 and B4, further comprising:
B31. sending a reverse setup message for the MS-PW to the source U-PE by the terminal U-PE; the reverse setup message carrying information on fault information report capability and fault detection capability supported by the terminal U-PE or carrying the supported capability information set determined during the positive setup process of the MS-PW;
B32. receiving by the S-PEs the reverse setup message hop by hop, and determining whether the information on the fault information report capability is supported locally and whether the information on the fault detection capabilities are partially supported locally; if all or part of the fault information report capability and the fault detection capabilities is supported, keeping only information on the locally supported capabilities in the reverse setup message, forwarding the reverse setup message, and going to step B33; if none of the fault information report capability and the fault detection capabilities is supported, going to step B4;
B33. upon receiving the reverse setup message forwarded by S-PEs hop by hop, determining by the terminal U-PE whether information on the kept capabilities is supported locally; if all or part of the kept capabilities is supported, determining to perform an MS-PW maintenance operation in the supported capability information set in accordance with a local policy; if none of the kept capabilities is supported, otherwise going to step B4.

12. The method according to claim 11, wherein
the information on fault information report capability refers to: if an SS-PW connected to the U-PE or S-PE fails, a U-PE or S-PE involved in the SS-PW can create and send a fault notification message carrying fault information to a downstream S-PE or U-PE, and can identify and process the fault notification message;
the information on fault detection capability refers to: the U-PEs or S-PEs can identify and process end-to-end fault detection messages for the MS-PW sent by U-PE and/or single-segment fault detection messages sent between PEs.

13. The method according to claim 12, wherein if all U-PEs and S-PEs support the fault information report capability and can identify and process the end-to-end fault detection messages, the MS-PW is maintained as follows:
if an SS-PW of the MS-PW fails, creating and sending a fault notification message carrying fault information downstream by the S-PE;
forwarding, by downstream S-PEs, the fault notification message to a U-PE hop by hop transparently, or receiving the fault notification message by a U-PE at downstream;
obtaining the fault information from the received fault notification message and performing maintenance on the MS-PW in accordance with the fault information by the U-PE.

14. The method according to claim 13, wherein an SS-PW is determined by the S-PE involved in the SS-PW as failed in the following way:
sending, by a PE connected to one end of the SS-PW, a single-segment fault detection message to an opposite end for detection in accordance with a predetermined triggering condition or by a predetermined time; determining by the opposite end whether the single-segment fault detection message is received in accordance with the predetermined triggering condition or by the predetermined time; if the single-segment fault detection message is received accordingly, determining the SS-PW operates normally; otherwise determining the SS-PW as failed; or
sending, by a PE connected to one end of the SS-PW, a single-segment fault detection message to an opposite end, determining whether a response message to the single-segment fault detection message from the opposite end is received within a preset time; if the response message is received within the preset time, determining the SS-PW operates normally; otherwise determining the SS-PW as failed.

15. The method according to claim 14, further comprising: upon detecting a Tunnel fault, or a PW state notification fault, or a local PE fault, creating a fault notification message carrying fault information and sending the fault notification message downstream by the S-PE.

16. The method according to claim 11, wherein if all U-PEs and S-PEs support only end-to-end fault detection messages, the MS-PW is maintained as follows:
sending, by U-PE1 of the MS-PW, an end-to-end MS-PW fault detection message in accordance with a predetermined triggering condition or by a predetermined time; receiving and transparently transmitting the end-to-end fault detection message hop by hop downstream by the S-PEs;
determining, by U-PE2, whether the end-to-end fault detection message is received in accordance with the predetermined triggering condition or by the predetermined time; and if the end-to-end fault detection message is received accordingly, determining the MS-PW operates normally; otherwise determining the MS-PW as failed and performing maintenance.

17. The method according to claim 11, wherein if all U-PEs and S-PEs support only end-to-end fault detection messages, the MS-PW is maintained as follows:
sending an end-to-end MS-PW fault detection message by U-PE1 of the MS-PW;
receiving and transparently transmitting, by S-PEs, the end-to-end fault detection message hop by hop to a second Ultimate Provider Equipment (U-PE2) downstream;
upon receiving the end-to-end fault detection message, returning a response message to U-PE1 by U-PE2; and
monitoring a response time of the end-to-end fault detection message by U-PE1; and if the response message is received before the response time expires, determining the MS-PW operates normally; otherwise determining the MS-PW as failed.

18. The method according to claim 13, 16, or 17, wherein the positive setup message and/or the reverse setup message further contains information on supported fault detection message type capability, and the U-PEs or S-PEs choose supported fault detection messages for detection in accordance with an ultimate intersection of capability information.

19. The method according to claim 12, wherein
the end-to-end fault detection message contains a first identification information, which is used by the S-PEs or U-PEs to identify whether a received message is an end-to-end fault detection message; and/or
the fault notification message contains a second identification information, which is used by the S-PEs or U-PEs to identify whether a received message is a fault notification message; and/or
the single-segment fault detection message contains a third identification information, which is used by the S-PEs or U-PEs to identify whether a received message is a single-segment fault detection message.

20. The method according to claim 13, wherein the fault information comprises fault type information and fault location information.
